# EUROPEAN PATENT APPLICATION

(11) **EP 3 360 419 A1**
(43) Date of publication of application: **15.08.2018**
(21) Application number: 18382066.1
(22) Date of filing: 07.02.2018
(51) Int. Cl.: A22B 7/00, B65D 88/12, B65F 1/16

(54) **STORAGE FACILITY FOR STORAGE AND TRANSPORTATION OF ANIMAL BYPRODUCTS**

(30) Priority: 09.02.2017 ES 201730127 U
(71) Applicant: Sistemas Bio Securitas S.L., 28011 Madrid (ES)
(72) Inventor: PEREZ MUÑOZ, Rodrigo, 28011 MADRID (ES)
(74) Representative: Capitán García, Maria Nuria

(57) **Abstract**

Storage facility for storing and transporting animal byproducts with a container comprising a peripheral wall arranged between a base and an upper opening; a lid that covers the upper opening and comprises a mobile cover portion and a fixed cover portion joined to each other by hinging means; control means for the opening and closing of the mobile cover portion comprising a vertical rod, a pulley and an actuation cable with a first end for attachment to the mobile cover portion and a second traction end, where the control means are coupled to the outside of the peripheral wall of the container by a vertical guide that defines an inner channel in which slides the vertical rod, and attachment means that fix the position of the vertical rod with respect to the vertical guide.

## Description

### FIELD OF THE INVENTION

The present invention relates to a storage facility that allows storing animal byproducts in installations for generating said byproducts, such as cattle farms, meat industries, abattoirs, etc., as well as t heir direct transportation from the installations of origin to the processing or disposal plant, without the storage facility passing through any other installations.

### BACKGROUND OF THE INVENTION

Normally, in cattle farms, meat industries, abattoirs or any other type of installation producing animal byproducts, that is, the whole bodies or parts of dead animals or products of animal origin not intended for human consumption, which are collected after a temporary storage in a special storage facility located in said installations and transported to the place where they are processed or disposed of.

In installations producing animal byproducts the storage facility is generally placed above the ground, that is, not buried in it, such that a step can be used to facilitate dumping the byproducts from the top of the step into the container of the storage facility, which is located at the lower part of the step. If there is no step in the ground elevation means can be used to deposit the animal byproducts in the container.

As shown in document ES 2378032, published on 4 April 2012, deposits generally comprise a container with a lid. The container comprises an upper opening providing access to an inner space where the animal byproducts are stored.

The lid covers the upper opening of the container and comprises a mobile cover portion and a fixed cover portion, connected by hinging means that act as a pivoting point for the mobile cover portion with respect to the fixed cover portion.

Similarly, the storage facility comprises means for controlling the opening and closing of the mobile cover portion comprising a vertical rod, a pulley attached to the vertical rod, and an actuation cable that runs in a groove of the pulley; the wire comprises a first end for attachment to the mobile cover portion and a second traction end which, when actuated, opens or closes the mobile cover portion.

This known storage facility h as been designed to store animal byproducts for subsequent loading onto the vehicle that carries them directly to the processing or disposal plant. For this reason, it also comprises elevation, rotation and tilting means for the container.

Although the specific configuration provided for the known storage facility allows considerably reducing the number of displacements of the vehicle carrying the animal byproducts to the place of processing or disposal, the intention is to improve these current systems that unload the animal byproducts from the container into the vehicle.

For this purpose it is necessary to design a storage facility for storing and transporting animal byproducts that improves on the current systems in a simple and economic manner.

### DESCRIPTION OF THE INVENTION

The present invention is established and characterized in the independent claims, while the dependent claims describe additional features thereof.

The invention relates to a storage facility for storing and transporting animal byproducts, improving on current systems for collection and transport of animal byproducts, by loading the container in the vehicle and transporting it to the processing or disposal plant.

The invention solves the technical problem addressed since the specific design and structure of the control means for opening and closing the mobile cover portion of the lid are coupled to the outside of the peripheral wall of the container of the storage facility by a vertical guide defining an inner channel in which slides the vertical rod of said control means, and also comprises attachment means that fix the position of the vertical rod with respect to the vertical guide, thereby making it easy to place the control means between a first extended position where they can perform their intended function, that is opening or closing the lid, and a second retracted position when said function is not required for some time, such as when the storage facility is placed on a vehicle that transports it to the processing plant for eliminating the animal byproducts contained in it.

This eliminates the need to unload the animal byproducts contained in the storage facility into the vehicle, thereby improving on current systems by taking the container loaded with animal byproducts from the installation of origin to the processing or disposal plant.

### BRIEF DESCRIPTION OF THE FIGURES

The present specification is complemented by a set of drawings that illustrate a preferred embodiment of the invention and are not meant to limit the invention in any way.
Figure 1 represents a schematic elevation view of the storage facility for storing and transporting animal byproducts with the control means for opening and closing the mobile cover portion of the lid in a first extended position.
Figure 2 represents a schematic elevation view of the storage facility for storing and transporting animal byproducts, with control means for opening and closing the mobile cover of the lid in a second retracted position.
Figure 3 represents a top sectional view of the vertical rod and the vertical guide shown in either of figures 1 or 2.

### DETAILED DESCRIPTION OF THE INVENTION

The present invention is a storage facility for storing and transporting animal byproducts of the type raised above the ground in installations generating animal byproducts such as cattle farms, meat industries, abattoirs, etc.

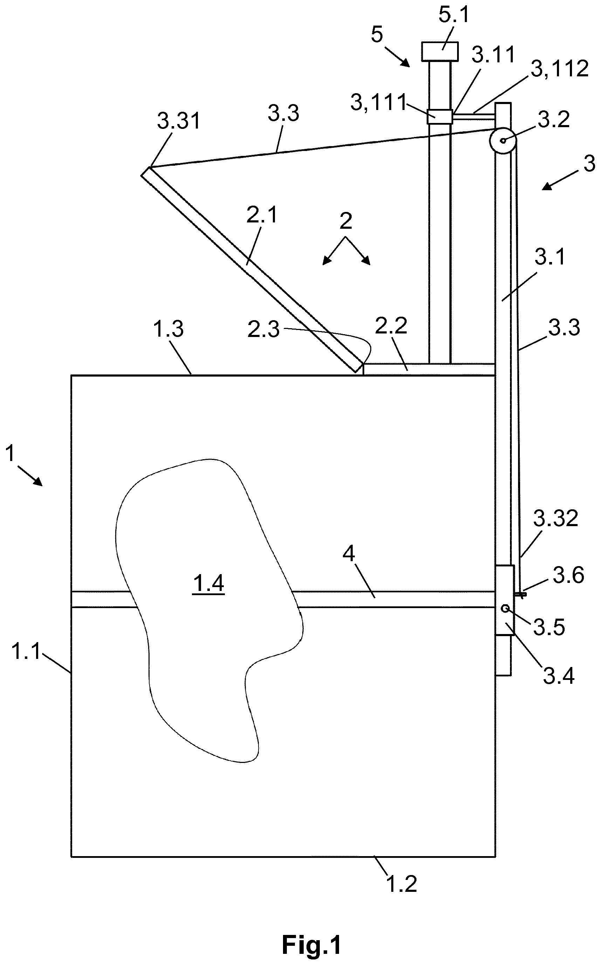

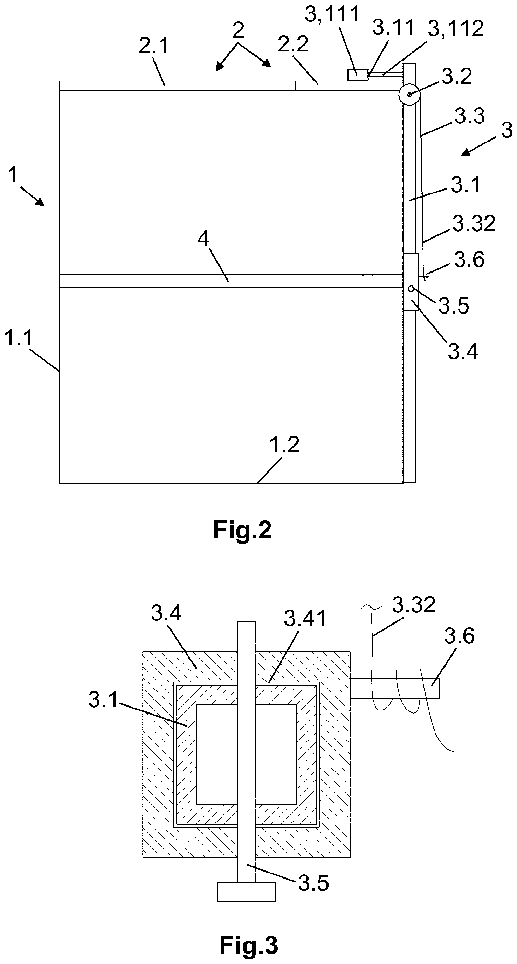

As shown in figures 1 and 2, the storage facility comprises a container (1) which in turn comprises a peripheral wall (1.1) arranged between a base (1.2) and an upper opening (1.3), defining an inner space (1.4) in which the animal byproducts are stored.

In addition, the storage facility comprises a lid (2) that covers the upper opening (1.3) of the container (1), which comprises a mobile cover portion (2.1) and a fixed cover portion (2.2) joined to each other by hinging means (2.3) that act as a pivoting point for the mobile portion (2.1) with respect to the fixed cover portion (2.2).

Preferably, the mobile cover portion (2.1) and the fixed cover portion (2.2) of the lid (2) have different dimensions, the mobile cover portion (2.1) covering approximately 70% of the upper opening (1.3).

Also preferably, the hinging means (2.3) are removable hinges which allow connecting or disconnecting the mobile cover portion (2.1) with respect to the fixed cover portion (2.2), for example to facilitate unloading the animal byproducts inside the container (1).

In addition, the storage facility comprises control means (3) for opening and closing the mobile cover portion (2.1), which in turn comprise a vertical rod (3.1), a pulley (3.2) and an actuation cable (3.3). The pulley (3.2) is attached to the vertical rod (3.1), while the actuation cable (3.3) runs inside the groove of the pulley (3.2). The cable (3.3) comprises a first end (3.31) for attachment to the mobile cover portion (2.1), and a second end (3.32) for traction which, when actuated upon, regulates the opening or closing of the mobile cover portion (2.1), depending on whether it is pulled on or loosened.

Preferably, the traction of the actuation cable (3.3), through its second end (3.32) is performed manually and the cable (3.3) is attached to a retaining element (3.6), in order to maintain an open position of the mobile cover portion (2.1) of the lid (2). However, other types of means (not shown in the figures), whether mechanical, electrical, hydraulic or pneumatic can be provided to carry out both the traction and the locking of the actuation cable (3.3).

On another hand, as can be seen in figure 3, the control means (3) are coupled to the outside of the peripheral wall (1.1) of the container (1) by means of a vertical guide (3.4). For example, the vertical guide (3.4) can be attached to the container (1) by a belt (4) surrounding the peripheral wall (1.1).

The vertical guide (3.4) defines an inner channel (3.41) inside which slides the vertical rod (3.1). Preferably, the inner channel (3.41) of the vertical guide (3.4) comprises inner dimensions matching the outer dimensions vertical rod (3.1), so that said vertical rod (3.1) slides snugly in the inner channel (3.41).

In the embodiment shown in figure 3, the vertical rod (3.1) and the vertical guide (3.4) have a square cross section; however, the cross section could have any other shape, such as rectangular, circular, etc., provided it allow a telescoping union of the two parts (3.1, 3.4). Similarly, in a less preferred embodiment the inner channel (3.41) can be formed by a vertical guide (3.1) with a U-shaped cross section.

In addition, fixing means (3.5) lock the position of the vertical rod (3.1) with respect to the vertical guide (3.4). Preferably, the attachment means (3.5) cross the corresponding coaxial orifices made in the wall of said vertical rod and guide (3.1, 3.4). For example, the attachment means (3.5) could be a screw, bolt, or any other similar attachment means.

In this way the control means (3) for opening and closing the mobile cover portion (2.1) of the lid (2) can be placed between two positions:
- a first extended position (see figure 1), that is, raising the vertical rod (3.1) to a position where the pulley (3.2) is located above the lid (2), such that it facilitates actuating the cable (3.3) to regulate the opening or closing of the mobile cover portion (2.1), and
- a second retracted position (see figure 2), that is, lowering the vertical rod (3.1) to a lower position where the vertical rod (3.1) and the pulley (3.2) are withdrawn, for example located under the lid (2) next to the peripheral wall (1.1) of the container (1).

In this way it is possible to extend the control means (3) above the lid (2) so that they fulfill their intended function, or said means (3) may be withdrawn to a lower position under the lid (2) where they do not hinder, for example, the loading tasks of the container (1) on a vehicle (not shown in the figures) that transports said container (1) to a processing or disposal plant (not shown in the figures), as well as unloading the animal byproducts contained therein in said processing or disposal plant.

On another hand, preferably the vertical rod (3.1) is coupled to attachment means (3.11) for a chimney (5) covered with an access lid (5.1), through which the inside (1.4) of the container (1) is ventilated. The chimney (5) can be coupled to the fixed cover portion (2.2) of the lid (2), protruding at least 30 cm. out of it. Similarly, it can be separated from the lid (2) to, for example, load the container into the vehicle.

The attachment means (3.11) preferably comprise a flange or clamp (3.111) tightly fitted around the chimney (5) and a connecting element (3.112) that attaches said flange (3.111) to the vertical rod (3.1).

## Claims

1. Storage facility for storing and transporting animal byproducts, placed raised from the ground, comprising:
- a container (1) comprising a peripheral wall (1.1) arranged between a base (1.2) and an upper opening (1.3), defining an inner space (1.4) in which the animal byproducts are stored,
- a lid (2) that covers the upper opening (1.3) of the container (1), said lid (2) comprising a mobile cover portion (2.1) and a fixed cover portion (2.2) joined to each other by hinging means (2.3) that act as a pivoting point for the mobile cover portion (2.1) with respect to the fixed cover portion (2.2),
- control means (3) for opening and closing the mobile cover portion (2.1) that comprise a vertical rod (3.1), a pulley (3.2) attached to the vertical rod (3.1), and an actuation cable (3.3) that runs in a groove of the pulley (3.2); the cable (3.3) comprises a first end (3.31) for attachment to the mobile cover portion (2.1), and a second traction end (3.32) which when actuated on will open or close the mobile cover portion (2.1),
**characterized in that** the control means (3) are coupled to the outside of the peripheral wall (1.1) of the container (1) by a vertical guide (3.4) that defines an inner channel (3.41) in which slides the vertical rod (3.1), and attachment means (3.5) that fix the position of the vertical rod (3.1) with respect to the vertical guide (3.4).

2. Storage facility according to claim 1, where the inner channel (3.41) of the vertical guide (3.4) comprises inner dimensions matching the outer dimensions of the vertical rod (3.1), such that said vertical rod (3.1) slides snugly in the inner channel (3.41).

3. Storage facility according to claim 1, where the attachment means (3.5) cross corresponding coaxial orifices made in the vertical rod (3.1) and the vertical guide (3.4).

4. Storage facility according to claim 1, where the vertical guide (3.4) is attached to the container (1) by a belt (4) that surrounds the peripheral wall (1.1).

5. Storage facility according to claim 1, where the vertical rod (3.1) is coupled to attachment means (3.11) of a chimney (5).

6. Storage facility according to claim 5, where the attachment means (3.11) comprise a flange or clamp (3.111) tightly fitted around the chimney (5), and a connection element (3.112) that attaches the flange (3.111) to the vertical rod (3.1).

7. Storage facility according to claim 1 where the mobile cover portion (2.1) and the fixed cover portion (2.2) of the lid (2) have different dimensions, the mobile cover portion (2.1) covering approximately 70% of the upper opening (1.3).

8. Storage facility according to claim 1, where the hinging means (2.3) are removable hinges that allow coupling or uncoupling the mobile cover portion (2.1) with respect to the fixed cover portion (2.2).

9. Storage facility according to claim 1, where the traction of the actuation cable (3.3) is performed manually by the second end (3.32) thereof, and the cable (3.3) is fixed in a retaining element (3.6) of said cable (3.3), with a view to maintaining an open position of the mobile cover portion (2.1) of the lid (2) .

10. Storage facility according to claim 9, where the retaining element (3.6) of the cable (3.3) is attached to the outside of the vertical guide (3.4).
